# EUROPÄISCHE PATENTANMELDUNG

(11) **EP 0 709 148 A1**
(43) Veröffentlichungstag der Anmeldung: **01.05.1996**
(21) Anmeldenummer: 95111035.2
(22) Anmeldetag: 14.07.1995
(51) Int. Cl.: B21D 53/18, B21C 37/08, B62D 1/06

(54) **Verfahren zur Herstellung eines ringförmigen Teils sowie ringförmiges Teil aus einem Aluminiumrohr**

(30) Priorität: 30.09.1994 DE 4435143
(71) Anmelder: VAW Aluminium AG, D-30453 Hannover (DE)
(72) Erfinder: Böttger, Klaus-Georg, D-30952 Ronnenberg (DE); Mittelstaedt, Michael, D-53125 Bonn (DE); Steimmel, Franz, D-53604 Bad Honneff (DE)
(74) Vertreter: Patentanwälte Thömen & Körner

(57) **Zusammenfassung**

Die Herstellung eines ringförmigen Teils (wie Lenkräder für Kraftfahrzeuge, Ringe für Rollstuhlreifen usw.) erfolgt nach folgenden Verfahrensschritten:
a) Aus einer planen Tafel einer naturharten Aluminiumlegierung wird ein längsnahtgeschweißtes Aluminiumrohr mit einem Rohrdurchmesser von wenigstens 12 mm und einer Wanddicke von nicht größer als 1,5 mm hergestellt;
b) das Aluminiumrohr wird anschließend in Kalibrier- und Reduzierstationen derart bearbeitet, daß eine Reduzierung des Rohrdurchmessers von mindestens 3 mm bis 4 mm und eine Erhöhung der Wanddicke um mindestens 0,2 mm bis 0,3 mm erfolgen,
c) das Aluminiumrohr wird danach mittels einer Biegemaschine zu einem ringförmigen Teil geformt, und die aneinanderliegenden Enden des Aluminiumrohres werden durch Schweißen stumpf miteinander verbunden.

## Beschreibung

Die Erfindung betrifft ein Verfahren zur Herstellung eines ringförmigen Teils (wie Lenkräder für Kraftfahrzeuge, Ringe für Rollstuhlreifen usw.), und außerdem befaßt sich die Erfindung mit einem ringförmigen Teil aus einem Aluminiumrohr.

Ringförmige geschlossene Teile, die durch ein gebogenes Rohr gebildet sind, werden auf vielfältige Weise in unterschiedlichen Anwendungsgebieten benötigt. Unter anderem braucht man solche ringförmigen Teile als Lenkräder für Kraftfahrzeuge, als Ringe für Rollstuhlreifen oder auch als ringförmige Rahmen für Abdeckungen. Bisher wurden solche ringförmigen Teile insbesondere für Lenkräder bei Kraftfahrzeugen durch Strangpressen oder Ziehen aus Stahl gefertigt, und zwar entweder aus Stahlrohren oder auch aus vollem Stahl, bei welchem das Lenkrad also nicht als Hohlkörper ausgebildet ist. Das so hergestellte ringförmige Teil wird in üblicher Weise noch mit einer Haut aus Kunststoff oder Leder überzogen, um das fertige Lenkrad zu bilden.

Die bekannten aus Stahl gefertigten ringförmigen Teile erfüllen zwar alle Anforderungen eines Lenkrades hinsichtlich des Biegemoments, des Crashverhaltens bei einem Unfall, mechanische und chemische Materialeigenschaften und funktionsbedingte Lenkungseigenschaften beim täglichen Gebrauch, allerdings sind die Teile relativ schwer.

Bis heute gibt es nämlich keine Lenkräder aus vergleichsweise leichten längsnahtgeschweißten Aluminiumrohren. Für sich gesehen sind längsnahtgeschweißte Aluminiumrohre natürlich bekannt, allerdings mit solchen Abmessungen hinsichtlich des Rohrdurchmessers (Außendurchmesser) und der Wanddicke des Rohres, wie sie für Lenkräder nicht geeignet sind. Außerdem hat man die längsnahtgeschweißten Rohre auch nicht zu einem geschlossenen ringförmigen Teil zusammengefügt.

Mit den bekannten Herstellungsverfahren lassen sich nicht beliebig kleine Rohre mit geringem Durchmesser herstellen. Allgemein stößt man bei einem Rohrdurchmesser von etwa 12 mm an eine untere Grenze, bei einer maximalen Wanddicke des Rohres von etwa 1,3 mm bis 1,5 mm. Bedingt durch das Herstellungsverfahren von längsnahtgeschweißten Aluminiumrohren aus planen Aluminiumbändern sind bei geringen Rohrdurchmessern auch nur die relativ geringen Wanddicken von etwa 1,5 mm anzutreffen.

Das bekannte Verfahren zur Herstellung von längsnahtgeschweißten Rohren besteht darin, daß ein ebenes planes Band aus Aluminium durch kontinuierliches mechanisches Verbiegen zu einem kreisrunden hohlförmigen Schlitzrohr geformt wird, und daß anschließend durch ein Hochfrequenzschweißen eine Längsnaht erzeugt und das geschlossene Rohr gebildet wird. Die bekannten Anlagen zur kontinuierlichen Fertigung und zur Biegung der planen Bänder zu einem Rohr sind üblicherweise so ausgelegt, daß Bänder einer Stärke bzw. Wanddicke von großer als 1,5 mm nicht verwendet werden können, jedenfalls nicht bei solchen Anlagen, mit denen längsnahtgeschweißte Rohre mit kleinen Rohrdurchmessern hergestellt werden sollen.

Sofern größere Wanddicken (beispielsweise größer als 3 mm) erwünscht sind, lassen sich mit den bekannte Anlagen und Verfahren nur relativ große Durchmesser der längsnahtgeschweißten Aluminiumrohre realisieren, nicht aber kleine Rohrdurchmesser (Außendurchmesser) wie etwa 16 mm.

Demgegenüber lassen sich größere Wanddicken auch bei solchen kleinen Rohrdurchmessern bei stranggepreßten oder gezogenen Rohren durchaus realisieren, weshalb die Lenkräder bisher auf diese Weise hergestellt worden sind. Nachdem das stranggepreßte oder gezogene Rohr vorliegt, wird es mit einer Biegemaschine zu einem geschlossenen kreisförmigen Ring geformt und mit Hilfe einer mechanischen Stiftverbindung werden die beiden Rohrenden zusammengefügt. Dabei ist es nachteilig, daß diese mechanische Stiftverbindung optisch sehbar und auch fühlbar ist, was als störend empfunden wird.

In zunehmendem Maße besteht bei den Abnehmern und den Kunden von Rohren und ringförmigen Teilen der Wunsch nach längsnahtgeschweißten Aluminiumrohren. Dabei steht insbesondere die Forderung nach vergleichsweise großen Wanddicken bei geringem Außen-Rohrdurchmesser im Vordergrund, wie sie bisher bei längsnahtgeschweißten Aluminiumrohren nicht anzutreffen sind.

Der Erfindung liegt die Aufgabe zugrunde, völlig neue Anwendungsgebiete für längsnahtgeschweißte Aluminiumrohre zu schaffen und ein Verfahren zur Herstellung eines ringförmigen Teils anzugeben, welches aus einem längsnahtgeschweißten Aluminiumrohr mit einem relativ kleinen Außendurchmesser besteht und gleichwohl in neuartiger Weise eine relativ große Wanddicke aufweist.

Die Lösung dieser Aufgabe erfolgt durch die Merkmale des Patentanspruchs 1.

Bei der Erfindung wird zunächst in einem ersten Schritt ein längsnahtgeschweißtes Aluminiumrohr mit einem Rohrdurchmesser (Außendurchmesser) von wenigstens 12 mm und einer Wanddicke von nicht größer als 1,5 mm hergestellt. Wegen dieser genannten Werte des Rohrdurchmessers und der Wanddicke lassen sich in vorteilhafter Weise vorhandene und speziell darauf eingerichtete Anlagen für die Herstellung des längsnahtgeschweißten Aluminiumrohres verwenden.

In einem nächsten Schritt wird das längsnahtgeschweißte Aluminiumrohr in Kalibrier- und Reduzierstationen bearbeitet, beispielsweise in insgesamt sieben Stationen. Das Kalibrieren dient dazu, ein genaues Maß und die Rundheit des Aluminiumrohres einzuhalten. Mit den Reduzierstationen wird der zunächst relativ große Außendurchmesser von wenigstens 12 mm um mindestens 3 mm, vorzugsweise um einen Wert von größer oder gleich 4 mm, reduziert. Solche Reduzierstationen sind an sich bekannt und dienen dazu, das Rohr sozusagen zusammenzudrücken, um den Durchmesser des Aluminiumrohres zu reduzieren. Gleichzeitig wird bei diesem Vorgang die Wanddicke erhöht, und zwar erfindungsgemäß um mindestens 0,2 mm, vorzugsweise um einen Wert von größer oder gleich 3 mm. Bei diesem Reduziervorgang werden die Aluminiumrohre nicht nur in ihrer Wanddicke erhöht, sondern sie werden gleichzeitig auch noch etwas länger.

Am Ende dieses Verfahrensschrittes des Kalibrierens und des Reduzierens steht ein längsnahtgeschweißtes Aluminiumrohr zur Verfügung, welches wegen der Reduzierung um mindestens 3 mm bei einem relativ geringen Außendurchmesser von beispielsweise nur 8 mm eine vergleichsweise große Wanddicke von 1,7 mm oder 1,8 mm besitzt. Solche Werte sind bei längsnahtgeschweißten Aluminiumrohren völlig überraschend und neu.

Das soweit geschaffene längsnahtgeschweißte Aluminiumrohr mit den neuartigen Abmessungen wird in einem weiteren Verfahrensschritt mit Hilfe einer Biegemaschine zu einem ringförmigen Teil geformt, wobei die Enden des Aluminiumrohres aneinander liegen, und in einem abschließenden Verfahrensschrift werden die Enden des Aluminiumrohres durch Schweißen stumpf miteinander verbunden, so daß das gewünschte ringförmig geschlossene Teil vorliegt.

Ein wichtiger Gesichtspunkt der Erfindung und zugleich ein bedeutsamer Vorteil besteht darin, daß ein längsnahtgeschweißtes Aluminiumrohr mit solchen Werten hinsichtlich des Rohrdurchmessers und der Wanddicke zur Verfügung gestellt wird, welches es bisher mit diesen Abmessungen nicht gegeben hat. Dadurch wird als weiterer Vorteil auch die Möglichkeit geschaffen, dieses für sich gesehen schon neuartige längsnahtgeschweißte Aluminiumrohr weiter zu verarbeiten und daraus ein ringförmiges Teil für Lenkräder für Kraftfahrzeuge oder dergleichen zu bilden. Es werden dabei solche Werte und Abmessungen hinsichtlich des Rohrdurchmessers und der Wanddicke erzielt, wie sie bisher nur bei stranggepreßten oder gezogenen Rohren möglich waren. Überraschend ist vor allem die relativ große Wanddicke des neuen längsnahtgeschweißten Aluminiumrohres bei den angegebenen geringen Rohrdurchmessern.

Aufgrund dieser relativ großen Wanddicke erschließt die Erfindung in vorteilhafter Weise ein völlig neues Anwendungsgebiet für längsnahtgeschweißte Aluminiumrohre, die jetzt auch beispielsweise für Lenkräder für Kraftfahrzeuge verwendet werden können, die bislang durch Strangpressen oder Ziehen aus Stahl gefertigt wurden. Dabei ist es weiterhin von Vorteil, daß sich bei einem Lenkrad in gewünschter Weise eine Gewichtseinsparung erzielen läßt, und zwar unter Beibehaltung der geforderten mechanischen Eigenschaften der bekannten Lenkräder.

Die nach dem erfindungsgemäßen Verfahren ermöglichte relativ große Wanddicke führt im übrigen auch noch zu dem Vorteil, daß beim Hochfrequenz-Schweißen beim Verfahrensschritt des Herstellens des längsnahtverscheißten Aluminiumrohres die Energie besser in das Material eingebracht werden kann. Demgegenüber bereitet es bekanntlich bei kleinen Rohrdurchmessern oft Schwierigkeiten, die erforderliche Energie beim Hochfrequenz-Schweißen in das Rohr einzubringen, wenn die Wanddicke nur relativ gering ist.

Es ist noch anzumerken, daß das weiter oben beschriebene Reduzierverfahren bzw. die Kalibrier- und Reduzierstationen an sich bekannt sind, jedoch hat man diese Stationen bisher nicht eingesetzt, um längsnahtgeschweißte Rohre mit den erfindungsgemäßen Werte bezüglich des Rohrdurchmessers und der Wanddicke herzustellen. Vielmehr beschränkte sich die Anwendung der bekannten Kalibrier- und Reduzierstationen darauf, in einem Betrieb für die Herstellung von Rohren die vorhandenen und sehr kostenintensiven Anlagen besser ausnutzen zu können. Wenn beispielsweise eine vorhandene Anlage darauf ausgelegt war, Rohre mit einem bestimmten ersten relativ großen Durchmesser herzustellen, und wenn der Wunsch bestand, auch Rohre mit einem ganz bestimmten zweiten kleineren Durchmesser herzustellen, wurden Kalibrier- und Reduzierstationen eingesetzt. Auf diese Weise konnte man davon absehen, für die Herstellung der Rohre mit dem erwähnten zweiten Durchmesser extra eine neue Anlage für deren Herstellung zu konzipieren und mit großen Kostenaufwand aufzubauen.

Gemäß einer vorteilhaften Weiterbildung der Erfindung ist vorgesehen, daß der Rohrdurchmesser des im ersten Verfahrensschritt hergestellten längsnahtverschweißten Aluminiumrohres von 16 mm auf 12 mm verringert und die Wanddicke von 1,5 mm auf 1,8 mm erhöht wird. Eine andere zweckmäßige Ausgestaltung der Erfindung sieht vor, den Rohrdurchmesser des längsnahtgeschweißten Aluminiumrohres von 12 mm auf 8 mm oder von 14 mm auf 10 mm zu reduzieren und die Wanddicke ebenfalls von 1,5 mm auf 1,8 mm zu erhöhen. Die genannten Werte sind besonders vorteilhaft in der praktischen Anwendung und erfüllen die Anforderungen beim Einsatz des neuen ringförmigen Teils als Lenkräder für Kraftfahrzeuge oder auch als Ringe für Rollstuhlreifen. Diese Ringe sind bekanntlich am Reifen eines Rollstuhls befestigt und können von der den Rollstuhl benutzenden Person angefaßt werden, um den Rollstuhl zu bewegen. Daneben sind selbstverständlich auch weitere Anwendungsfälle des neuen ringförmigen Teils möglich.

Als besonders zweckmäßig hat sich erwiesen, für das Aluminiumrohr eine AlMgMn-Legierung zu verwenden.

Bei einer anderen vorteilhaften Ausgestaltung der Erfindung ist vorgesehen, daß die Enden des längsnahtgeschweißten Aluminiumrohres durch Orbitalschweißen stumpf miteinander verbunden werden, um das ringförmige Teil zu bilden. Zweckmäßigerweise können auch das Abtrennstumpfschweißen oder das Magnet-Arc-Schweißen zur Anwendung gelangen. Diese genannten Schweißverfahren sind zwar an sich bekannt, wurden bisher aber nicht bei längsnahtgeschweißten Rohren mit den erfindungsgemäßen Werten angewendet.

Neben dem Verfahren betrifft die Erfindung auch noch ein ringförmiges Teil aus einem Aluminiumrohr, wobei das Aluminiumrohr ein ohne Zusatzwerkstoffe längsnahtgeschweißtes Rohr aus einer naturharten Aluminiumlegierung ist. Diesbezüglich liegt der Erfindung die Aufgabe zugrunde, ein solches ringförmiges Teil zu schaffen, welches bei relativ kleinem Rohrdurchmesser (Außendurchmesser) eine relativ große Wanddicke besitzt, und zwar in bisher nicht üblichen Abmessungen, um einem längsnahtgeschweißten Aluminiumrohr neue Anwendungsgebiete zu eröffnen.

Die Lösung dieser Aufgabe erfolgt durch die Merkmale des Patentanspruchs 8.

Durch die Erfindung wird in neuartiger Weise ein ringförmiges Teil aus einem ohne Zusatzwerkstoffe längsnahtgeschweißtem Rohr aus einer naturharten Aluminiumlegierung vorgestellt, dessen Rohrdurchmesser größer oder gleich 8 mm ist, wobei die Wanddicke des Aluminiumrohres vergleichsweise groß ist und mehr als 1,5 mm, vorzugsweise mindestens 1,8 mm beträgt.

Durch die Erfindung wird somit ein ringförmiges Teil gemäß dem Oberbegriff des Patentanspruchs 1 geschaffen, welches sich erstmals auch für Lenkräder für Kraftfahrzeuge, für Ringe für Rollstuhlreifen usw. verwenden läßt. Dabei ist es von Vorteil, daß das neuartige ringförmige Teil hinsichtlich seiner mechanischen Eigenschaften solche Werte aufweist, wie sie bisher nur bei stranggepreßten oder gezogenen Rohren aus Stahl anzutreffen waren.

Gemäß einer zweckmäßigen Ausgestaltung der Erfindung besitzt das ringförmige Teil eine Zugfestigkeit von mindestens 200 MPa, und besonders zweckmäßig ist eine Zugfestigkeit von 350 MPa. Dieser Wert für die Zugfestigkeit ist hinreichend groß, um das ringförmige Teil für Lenkräder bei Kraftfahrzeugen einzusetzen und die an ein solches Lenkrad geforderten Eigenschaften zu erfüllen. Man kann also die bekannten nachteiligen Lenkräder aus Stahl ohne weiteres durch die leichteren ringförmigen erfindungsgemäßen Teile ersetzen, wobei die an ein Lenkrad gestellten Anforderungen, wie sie von den Stahlrohren erfüllt werden, auch von dem erfindungsgemäßen ringförmigen Teil beibehalten werden.

## Patentansprüche

1. Verfahren zur Herstellung eines ringförmigen Teils (wie Lenkräder für Kraftfahrzeuge; Ringe für Rollstuhlreifen usw.) aus einem aus Aluminium bestehenden Rohr (Rundrohr oder profiliertes Rohr), **gekennzeichnet durch** folgende Verfahrensschritte:
a) aus einem planen Band einer naturharten Aluminiumlegierung wird in an sich bekannter Weise ein ohne Zusatzwerkstoffe längsnahtgeschweißtes Aluminiumrohr mit folgenden Merkmalen hergestellt:
- der Rohrdurchmesser (Außendurchmesser) beträgt wenigstens 12 mm,
- die Wanddicke des Aluminiumrohres ist nicht größer als 1,5 mm,
b) das Aluminiumrohr wird in Kalibrier- und Reduzierstationen derart bearbeitet, daß neben einer Kalibrierung eine Reduzierung des Rohrdurchmessers um mindestens 3 mm und eine Erhöhung der Wanddicke um mindestens 0,2 mm erfolgen,
c) das Aluminiumrohr mit reduziertem Rohrdurchmesser und erhöhter Wanddicke wird mittels einer Biegemaschine zu einem ringförmigen Teil geformt, wobei die Enden des Aluminiumrohres aneinander liegen,
d) die Enden des Aluminiumrohres werden durch Schweißen stumpf miteinander verbunden, so daß ein ringförmig geschlossenes Teil gebildet wird.

2. Verfahren nach Anspruch 1, **dadurch gekennzeichnet**, daß das Aluminiumrohr in Kalibrier- und Reduzierstationen derart bearbeitet wird, daß neben einer Kalibrierung eine Reduzierung des Rohrdurchmessers um wenigstens 4 mm und eine Erhöhung der Wanddicke um wenigstens 0,3 mm erfolgen.

3. Verfahren nach Anspruch 1 und/oder 2, **dadurch** **gekennzeichnet**, daß der Rohrdurchmesser des längsnahtgeschweißten Aluminiumrohres von mindestens 15 mm auf 12 mm verringert und die Wanddicke von 1,5 mm auf 1,8 mm erhöht wird.

4. Verfahren nach Anspruch 1 und/oder 2, **dadurch gekennzeichnet**, daß der Rohrdurchmesser des längsnahtgeschweißten Aluminiumrohres von 12 mm auf 8 mm verringert und die Wanddicke von 1,5 mm auf 1,8 mm erhöht wird.

5. Verfahren nach Anspruch 1 und/oder 2, **dadurch gekennzeichnet**, daß der Rohrdurchmesser des längsnahtgeschweißten Aluminiumrohres von 14 mm auf 10 mm verringert und die Wanddicke von 1,5 mm auf 1,8 mm erhöht wird.

6. Verfahren nach einem oder mehreren der vorangehenden Ansprüche 1 - 5, **dadurch gekennzeichnet**, daß das längsnahtgeschweißte Aluminiumrohr aus einer AlMgMn-Legierung besteht.

7. Verfahren nach einem oder mehreren der vorhergehenden Ansprüche 1 - 6, **dadurch gekennzeichnet**, daß die Enden des Aluminiumrohres durch Orbitalschweißen miteinander verbunden werden.

8. Verfahren nach einem oder mehreren der vorangehenden Ansprüche 1 - 6, **dadurch gekennzeichnet**, daß die Enden des Aluminiumrohres durch Abbrennstumpfschweißen miteinander verbunden werden.

9. Verfahren nach einem oder mehreren der vorhergehenden Ansprüche 1 - 6, **dadurch gekennzeichnet**, daß die Enden des Aluminiumrohres durch Magnet-Arc-Schweißen miteinander verbunden werden.

10. Ringförmiges Teil (wie Lenkräder für Kraftfahrzeuge, Ringe für Rollstuhlreifen usw.) aus einem Aluminiumrohr (Rundrohr oder profiliertes Rohr), wobei das Aluminiumrohr ein ohne Zusatzwerkstoffe längsnahtgeschweißtes Rohr aus einer naturharten Aluminiumlegierung ist, **dadurch gekennzeichnet**, daß der Rohrdurchmesser größer oder gleich 8 mm ist, und daß die Wanddicke des Aluminiumrohres mindestens 1,5 mm beträgt.

11. Ringförmiges Teil nach Anspruch 10, **dadurch gekennzeichnet**, daß die Wanddicke des Aluminiumrohres mindestens 1,8 mm beträgt.

12. Ringförmiges Teil nach Anspruch 10 und/oder 11, **dadurch gekennzeichnet**, daß seine Zugfestigkeit mindestens 200 MPa beträgt.

13. Ringförmiges Teil nach einem oder mehreren der vorhergehenden Ansprüche 10 - 12, **dadurch gekennzeichnet**, daß es aus einer AlMgMn-Legierung besteht.

14. Ringförmiges Teil nach einem oder mehreren der vorhergehenden Ansprüche 10 - 13, **dadurch gekennzeichnet**, daß seine Zugfestigkeit 350 MPa beträgt.
